# EUROPÄISCHE PATENTSCHRIFT

(11) **EP 4 585 803 B1**
(45) Veröffentlichungstag und Bekanntmachung des Hinweises auf die Patenterteilung: **09.09.2026**
(21) Anmeldenummer: 25179386.5
(22) Anmeldetag: 10.02.2022
(51) Int. Cl.: F03G 7/06

(54) **AKTOR MIT EINEM DRAHT AUS EINER FORMGEDÄCHTNISLEGIERUNG UND VORRICHTUNG ZUR FREIGABE EINES BOLZENS MIT EINEM SOLCHEN AKTOR**
ACTUATOR COMPRISING A WIRE MADE OF A SHAPE MEMORY ALLOY AND DEVICE FOR RELEASING A BOLT HAVING SUCH AN ACTUATOR
ACTIONNEUR AVEC UN FIL EN ALLIAGE À MÉMOIRE DE FORME ET DISPOSITIF DE LIBÉRATION D'UN BOULON AVEC UN TEL ACTIONNEUR

(30) Priorität: 11.02.2021 DE 102021103203
(43) Veröffentlichungstag der Anmeldung: 16.07.2025
(62) Dokumentnummer(n) der früheren Anmeldung(en) nach Art. 76 EPÜ: 22713538.1 / 4 291 780
(73) Patentinhaber: Deutsches Zentrum für Luft- und Raumfahrt e.V., 53227 Bonn (DE)
(72) Erfinder: Reershemius, Siebo, 49377 Vechta (DE)
(74) Vertreter: REHBERG HÜPPE + PARTNER

(56) Entgegenhaltungen:
- EP-A2- 0 137 502
- WO-A1-2008/157466
- DE-A1- 102019 100 694
- US-A- 4 197 709

## Beschreibung

### TECHNISCHES GEBIET DER ERFINDUNG

Die Erfindung bezieht sich auf einen Aktor mit zwei in Richtung einer Aktorhauptachse elastisch aneinander abgestützten Endstücken und einem längs der Aktorhauptachse zwischen den Endstücken gespannten Draht aus einer Formgedächtnislegierung, der auf eine Längenänderung ansteuerbar ist, wobei der Draht mindestens sechs zusammenhängende Längenabschnitte aufweist, die nebeneinander jeweils längs der Aktorhauptachse zwischen den Endstücken gespannt sind, und wobei die zwischen den Endstücken gespannten Längenabschnitte bezüglich der Aktorhauptachse achsen- und/oder drehsymmetrisch zueinander angeordnet sind und unter gleich großen Winkeln zu einer Bezugsfläche verlaufen, zu der die Aktorhauptachse eine Flächennormale ist.

Weiterhin bezieht sich die Erfindung auf eine Vorrichtung zum Spannen und Freigeben eines Bolzens mit einem solchen Aktor. Eine solche Vorrichtung kann beispielsweise an einem Raumfahrzeug vorgesehen werden, um mit dem Freigeben des Bolzens eine über den Bolzen an dem Raumfahrzeug befestigte Einrichtung zum Zwecke ihres Aussetzens abzutrennen oder zum Zwecke ihrer Entfaltung freizugeben. Insbesondere kann durch das Freigeben eines elastisch vorgespannten Bauteils ein Solarpanel oder eine andere großflächige Struktur an dem Raumfahrzeug entfaltet werden.

### STAND DER TECHNIK

Aus der DE 10 2009 041 907 B4 ist eine Brems- und/oder Klemmvorrichtung bekannt, die ein eine zylindrische Führungsstange umgreifendes Gehäuse aufweist. Das Gehäuse umschließt vier Reibgehemme, die jeweils einen an die Führungsschiene anpressbaren Reibbacken als Teil einer elastischen Klemmhülse aufweisen und über ein Schiebekeilgetriebe betätigbar sind. Die Schiebekeilgetriebe sind zur Be- und Entlastung der Reibgehemme pro Be- und Entlastungsrichtung mittels eines Stellglieds und Federspeichern antreibbar. Dabei ist ein Zentralkörper, der Teile der Schiebekeilgetriebe lagert und die Klemmkräfte der Schiebekeilgetriebe radial abstützt und der zugleich Teile der Federspeicher lagert, in dem Gehäuse mit dem Stellglied längsverschiebbar. Hingegen ist die Klemmhülse in dem Gehäuse axial spielfrei angeordnet. Als Stellglied können beheiz- oder kühlbare Formgedächtniselemente verwendet werden. Eine konkrete Ausgestaltung eines Formgedächtniselements wird jedoch nicht beschrieben. Alle Stellglieder können sowohl für die Be- als auch die Entlastungsrichtung verwendet werden.

Aus der US 5 771 742 A ist ein Freigabemechanismus mit einem Betätigungselement aus einer Formgedächtnislegierung bekannt. Wenn das Betätigungselement über seine Übergangstemperatur erwärmt wird, übt es eine Kraft auf einen durch eine Druckfeder abgestützten Riegel aus. Die Kraft bewegt den Riegel in eine Freigabeposition. In der Freigabeposition gibt der Riegel eine in einer Antriebsfeder gespeicherte höhere Energie frei. Die Energie treibt ein Halteelement an, um es aus seinem Eingriff in eine freizugebende Struktur heraus zu bewegen. Das Halteelement wird durch eine Sperrklinke in seiner verriegelten Position gehalten, und die Sperrklinke wird zum Freigeben des Halteelements aus einer gefangenen Position in eine zurückgezogene Position bewegt, wenn der Riegel von dem Betätigungselement bewegt wird. Das Betätigungselement aus der Formgedächtnislegierung ist ein Draht, der sich beim Überschreiten der Übergangstemperatur verkürzt und dadurch den Riegel bewegt. Um den Weg, mit dem das Betätigungselement den Riegel bewegt, zu vergrößern, ist der Draht aus der Formgedächtnislegierung nicht auf kürzestem Wege zwischen dem Riegel und einem Gehäuse des Freigabemechanismus gespannt, sondern der Draht verläuft von seinem Befestigungspunkt an dem Gehäuse zunächst über eine größere Länge durch eine Bohrung in dem Gehäuse, bevor er sich von der Bohrung in dem Gehäuse zu dem Riegel erstreckt. Diese Erstreckung des Drahts zu dem Riegel verläuft unter einem Winkel von etwa 45° zu der Bewegungsrichtung des Riegels; und der Draht erstreckt sich dann quer zu der Bewegungsrichtung durch den Riegel, bevor er auf einem spiegelsymmetrischen Weg durch eine zweite Bohrung in dem Gehäuse bis zu einem zweiten Befestigungspunkt an dem Gehäuse gelangt. Ein Teil der auf diese Weise realisierten großen Länge des Drahts, die bei fester prozentualer Längenänderung des Drahts aus der Formgedächtnislegierung in eine große absolute Längenänderung resultiert, wird durch den Verlauf des Drahts unter dem Winkel von etwa 45° zu der Bewegungsrichtung des Riegels zwischen dem Gehäuse und dem Riegel kompensiert, weil dieser Winkel die Längenänderung des Drahts bezüglich der damit herbeigeführten Bewegung des Riegels untersetzt. Nach einmaligem Freigeben des Halteelements muss der bekannte Freigabemechanismus aufwändig zurückgesetzt werden, um erneut verwendet werden zu können. Im Weltraum mag dies nicht erforderlich sein. Für das Testen des Freigabemechanismus unter unterschiedlichen Belastungen ist dies jedoch von Nachteil. Zudem wird mit dem bekannten Freigabemechanismus das Halteelement aus seinem Eingriff in die Struktur zurückgezogen. Der Freigabemechanismus ist nicht zur direkten Freigabe eines Bolzens geeignet, so dass sich dieser von dem Rest des Freigabemechanismus entfernen kann.

Aus der US 7 422 403 B1 ist eine Freigabevorrichtung zum begrenzten Freigeben einer durch einen Bolzen mit einem Kopf befestigten Einrichtung bekannt. Ein Schaft des Bolzens weist einen Bereich mit reduziertem Durchmesser auf, in dem er plastisch verformbar ist. Der Bolzen ist von einer Hülse aus einer Formgedächtnislegierung umgeben, die sich axial ausdehnt, wenn sie über ihre Übergangstemperatur erwärmt wird. Dadurch wird der Bolzen permanent gelängt. Die Längenänderung bleibt erhalten, wenn die Formgedächtnislegierung wieder unter ihre Ausgangslänge abgekühlt wird. Diese bekannte Haltevorrichtung ist nur zur einmaligen Verwendung vorgesehen und gibt bei Betätigung den Bolzen nicht vollständig frei.

Auf einem ähnlichen Prinzip wie dasjenige, das in der US 7 422 403 B1 beschrieben ist, basiert das Produkt Frangibolt der Firma TiNi Aerospace, Inc., USA. Bei dem Produkt Frangibolt wird mit der Ausdehnung der Hülse aus der Formgedächtnislegierung ein Bolzen, der mit seinem einen Ende in eine freizugebende Struktur eingeschraubt ist, der durch die Hülse hindurchragt und dessen Kopf sich an dem der Struktur abgekehrten Ende der Hülse abstützt, durch Erwärmen der Hülse über ihre Übergangstemperatur in einem dafür präparierten Bereich seines Schafts gebrochen. Die Hülse besteht aus einer Formgedächtnislegierung mit einem one way memory-Effekt und muss vor erneuter Verwendung mechanisch in ihre gekürzte Form zurückgesetzt werden. Der aus einer Titanlegierung bestehende Bolzen wird bei der Freigabe der Struktur zerstört, d. h. er ist nur zur einmaligen Verwendung vorgesehen. Ein weiterer Nachteil ist, dass beim Brechen des Bolzens große elastische Kräfte schlagartig freigesetzt werden, die zu ungewollten Bewegungen der freigegebenen Struktur führen können.

Weiterhin ist es bekannt, einen Aktor auszubilden, in dem ein Draht aus einer Formgedächtnislegierung zwischen zwei Endstücken gespannt wird, der auf eine Längenänderung ansteuerbar ist. Konkret kann der Draht durch Anlegen einer elektrischen Spannung zwischen seinen Enden auf eine thermisch bedingte Verkürzung ansteuerbar sein. Die Spannung ruft einen Strom durch den Draht hervor, der aufgrund des elektrischen Widerstands des Drahts zu einer Erwärmung des Drahts bis über die Übergangstemperatur seiner Formgedächtnislegierung führt. Dadurch tritt die Verkürzung des Drahts zwischen seinen Enden auf, die die beiden Endstücke, zwischen denen der Draht gespannt ist, zusammenzieht.

Aus der EP 0 841 510 A1 ist ein Durchflussregelventil bekannt, das eine Trommel mit einer axialen Bohrung, ein an einem axialen Ende der Trommel angeordnetes Basiselement, einen in dem anderen axialen Ende der Trommel gehaltenen Ventilkörper, der mit dem Basiselement zusammenwirkt, so dass zwischen ihnen eine Ventilöffnung definiert wird, eine Vorspannfeder, die den Ventilkörper zum Variieren der Ventilöffnung in eine Richtung drückt, und einen Draht aus einer Formgedächtnislegierung, der den Ventilkörper mit der Trommel verbindet, umfasst. Der Draht aus der Formgedächtnislegierung übt als Reaktion auf eine thermische Deformation eine Kraft für eine Bewegung des Ventilkörpers gegen die Vorspannfeder aus, um die Ventilöffnung zu variieren. Der Draht ist mit einer elektrischen Quelle zum Erhitzen des Drahtes verbunden, um die thermische Deformation hervorzurufen. Die Trommel weist mindestens ein Verankerungs-element für den Draht auf. An dem Ventilkörper sind mehrere Angriffselemente für den Angriff des Drahtes ausgebildet. Die Trommel ist neben dem Verankerungselement mit einer Vielzahl von Richtungsänderungselementen versehen, um die herum sich der Draht erstreckt, so dass eine Länge des Drahtes größer als die Abstände zwischen dem Verankerungselement und den Angriffselementen ist. Der Ventilkörper ist axial in der axialen Bohrung der Trommel oder an dem Basiselement geführt.

Aus der DE 10 2019 100 694 A1 ist eine Formgedächtnisaktuatoranordnung bekannt, welche ein drahtförmiges Formgedächtniselement und zwei voneinander beabstandete Umlenkkörper aufweist, wobei das Formgedächtniselement mehrfach um die Umlenkkörper gewickelt ist und zwischen diesen eine Stellgliedanordnung bildet. Jeder Umlenkkörper weist zur Halterung des Formgedächtniselementes einen Drahthalterbereich auf, welcher zusammen mit Abschnitten des Formgedächtniselementes in eine Vergussmasse eingebettet ist.

### AUFGABE DER ERFINDUNG

Der Erfindung liegt die Aufgabe zugrunde, einen potenten kompakten Aktor auf Basis eines Drahts aus einer Formgedächtnislegierung und eine kompakte und funktionssichere Vorrichtung zum Spannen und Freigeben eines Bolzens mit diesem Aktor aufzuzeigen, die ohne großen Aufwand zur wiederholten Verwendung geeignet ist und die den Bolzen ohne Freisetzung großer Kräfte freigibt.

### LÖSUNG

Die Aufgabe der Erfindung wird durch einen Aktor mit den Merkmalen des unabhängigen Patentanspruchs 1 gelöst. Die abhängigen Patentansprüche 2 bis 10 sind auf bevorzugte Ausführungsformen des erfindungsgemäßen Aktors gerichtet. Der Patentanspruch 11 betrifft eine erfindungsgemäße Vorrichtung zum Spannen und Freigeben eines Bolzens mit dem erfindungsgemäßen Aktor. Die Patentansprüche 12 bis 15 sind auf bevorzugte Ausführungsformen der erfindungsgemäßen Vorrichtung gerichtet.

### BESCHREIBUNG DER ERFINDUNG

Bei einem erfindungsgemäßen Aktor mit zwei durch eine Druckfeder in Richtung einer Aktorhauptachse elastisch aneinander abgestützten Endstücken und einem längs der Aktorhauptachse zwischen den Endstücken gespannten Draht aus einer Formgedächtnislegierung, der auf eine Längenänderung ansteuerbar ist, wobei der Draht mindestens sechs zusammenhängende Längenabschnitte aufweist, die nebeneinander jeweils längs der Aktorhauptachse zwischen den Endstücken gespannt sind, und wobei die zwischen den Endstücken gespannten Längenabschnitte bezüglich der Aktorhauptachse achsen- und/oder drehsymmetrisch zueinander angeordnet sind und unter gleich großen Winkeln zu einer Bezugsfläche verlaufen, zu der die Aktorhauptachse eine Flächennormale ist, sind die Längenabschnitte zwischen Punkten der Endstücke gespannt, die jeweils längs eines Kreisbogens um die Aktorhauptachse herum angeordnet sind. Mit anderen Worten läuft der Draht bei dem erfindungsgemäßen Aktor zwischen den Endstücken hin und her. Die von dem Draht zwischen den Endstücken aufgebrachte Kraft ist daher mindestens sechsmal so groß, als wenn der Draht nur mit einem Längenabschnitt zwischen den Endstücken verlaufen würde. Zugleich ist das Ansteuern des Drahts auf seine Längenänderung aber nicht aufwändiger als bei nur einmaligem Verlauf zwischen den Endstücken. Ganz im Gegenteil können durch den mehrmaligen Verlauf des Drahts zwischen den Endstücken mit einer geraden Zahl seiner Längenabschnitte die beiden Enden des Drahts an einem der Endstücke liegen und dort für eine Beaufschlagung des Drahts mit einer elektrischen Spannung zwischen seinen Enden einfach zugänglich sein. Zudem wird die Relativanordnung der Endstücke durch die mindestens sechs zwischen ihnen verlaufenden Längenabschnitte des Drahts gegenüber Relativverkippungen stabilisiert. Letzteres gilt insbesondere dann, wenn nicht nur 6, sondern mindestens 12, bevorzugt mindestens 24, und am meisten bevorzugt mindestens 36 zusammenhängende Längenabschnitte des Drahts jeweils längs der Hauptachse zwischen den Endstücken gespannt sind. Es wirkt sich positiv auf die Stabilität der Relativanordnung der Endstücke gegenüber Verkippen aus, dass die Längenabschnitte des Drahts zwischen Punkten der Endstücke gespannt sind, die jeweils längs eines um die Aktorhauptachse herum verlaufenden Kreisbogens angeordnet sind.

Durch die Längenänderung des Drahts wird der Abstand der Endstücke und damit die Länge des Aktors längs der Aktorhauptachse variiert, wobei die Druckfeder zwischen den Endstücken weiter gespannt bzw. etwas entspannt wird. Damit kann auch eine von der Druckfeder über die Endstücke des Aktors auf externe Bauteile ausgeübte Kraft variiert werden, indem sie mehr oder weniger von dem Draht zwischen den Endstücken abgestützt wird.

Gegenüber einem nur einmal oder zweimal zwischen den Endstücken gespannten Draht, der dicker sein müsste, um dieselben Kräfte zwischen den Endstücken aufzubringen, wie der vielfach zwischen den Endstücken gespannte Draht des erfindungsgemäßen Aktors, sind zudem elektrische Vorteile gegeben. Der Strom, der zur direkten resistiven Beheizung des Drahts durch den Draht fließen muss, um dessen Temperatur binnen bestimmter Zeit über die Übergangstemperatur seiner Formgedächtnislegierung anzuheben, hängt linear von der Querschnittsfläche des Drahts ab. Bei einem dünneren Draht aus derselben Formgedächtnislegierung ist dieser Strom also kleiner und kann daher mit einfacheren Spannungsquellen bereitgestellt werden. Es versteht sich, dass diese Spannungsquellen eine höhere Spannung an den Draht anlegen müssen, um dieselbe Heizleistung über den dünneren, aber längeren Draht zu erreichen. Dennoch verbleiben Vorteile aufgrund des kleineren benötigten Stroms, und dies nicht allein aufgrund geringerer Mindestanforderungen an die Querschnittsflächen von Anschlussleitungen.

Es versteht sich, dass die Längenabschnitte des Drahts durch die Endstücke des Aktors nicht elektrisch miteinander verbunden sein dürfen, wenn der Draht durch Anlegen einer Spannung zwischen seinen Enden erwärmt werden soll. Diese elektrische Verbindung, die einen Kurzschluss der Längenabschnitte bedeuten würde, kann durch Ausbildung der Endstücke aus einem elektrisch isolierenden Material und/oder durch Beschichten der Endstücke und/oder des Drahts mit einem elektrisch isolierenden Material verhindert werden. Bei Ausbildung der Endstücke aus einem elektrisch isolierenden Material ist auf eine ausreichend große Steifigkeit der Endstücke zu achten, damit diese unter der von der Druckfeder auf sie ausgeübten Kraft und insbesondere unter der von dem Draht bei dessen Längenänderung auf sie ausgeübten Kraft nicht deformiert, d. h. nicht wesentlich verformt werden. Unter diesem Gesichtspunkt kann es sinnvoll sein, die Endstücke aus einer Keramik oder aus einer metallischen Legierung mit einer keramischen Oberflächenbeschichtung auszubilden.

Bei dem erfindungsgemäßen Aktor können die Endstücke ausschließlich durch die Druckfeder und den Draht aneinander abgestützt sein, d. h. auch ausschließlich durch die Druckfeder und den Draht in Richtung der Aktorhauptachse aneinander geführt sein.

Für die Stabilität der Relativanordnung der Endstücke gegenüber Verkippungen ist es förderlich, dass die zwischen den Endstücken gespannten Längenabschnitte des Drahts bezüglich der Aktorhauptachse achsen- und/oder drehsymmetrisch zueinander angeordnet sind. Vorzugsweise ist die Drehsymmetrie halb so vielfach vorhanden und idealerweise ist die Drehsymmetrie so vielfach vorhanden, wie Längenabschnitte zwischen den Endstücken gespannt sind.

Konkret kann der Draht zwischen seinen einzelnen Längenabschnitten über Haken herumgeführt sein, die an den Umfängen beider Endstücke angeordnet sind. Alternativ kann der Draht durch Löcher in den Endstücken hindurch geführt sein, wobei der Draht zwischen benachbarten Löchern in den Endstücken seine Richtung umkehrt. Zusätzlich kann der Draht zwischen seinen einzelnen Längenabschnitten, also dort, wo er über die Haken herumgeführt oder sich zwischen den Löchern an den Endstücken abstützt ist, mit den Endstücken verklebt sein. Hierdurch kann der Draht in seiner Längsrichtung für das Spannen der Längenabschnitte zwischen den Endstücken ausreichend an den Endstücken festgelegt sein, so dass es einer besonderen Klemmung des Drahts an den Endstücken, außer vielleicht an den Enden des Drahts, nicht bedarf. Jede Längenänderung der Längenabschnitte wirkt sich unmittelbar in eine Änderung des Abstands der Endstücke aus, die einem Hub des erfindungsgemäßen Aktors entspricht.

Die zwischen den Endstücken gespannten Längenabschnitte des Drahts verlaufen unter gleich großen Winkelns zu einer Bezugsfläche, zu der die Aktorhauptachse eine Flächennormale ist. Dadurch führt eine gleiche Längenänderung aller Endabschnitte, die ihrerseits gleiche Längen aller Längenabschnitte voraussetzt, zu einer überall gleichen Annäherung der beiden Endstücke durch die Längenänderung der Längenabschnitte. Vielfach werden die Winkel der Längenabschnitte zu der Bezugsfläche zumindest in etwa 90° betragen, so dass die Längenabschnitte zumindest im Wesentlichen parallel zu der Aktorhauptachse verlaufen, wobei kleine Abweichungen von 90° um nicht mehr als 10° und insbesondere um nicht mehr als 5° unerheblich sind. Dann werden durch die Längenänderung der Längenabschnitte keine oder zumindest keinen relevanten Torsionsmomente zwischen den Endstücken aufgebracht. Wenn solche Torsionsmomente jedoch durch gegenläufige Neigungen der Längenabschnitte ausgeglichen werden, kann durch gleich große Winkel der Längenabschnitte gegenüber der Bezugsfläche kleiner als 90° gezielt eine Untersetzung der Längenänderung der Längenabschnitte in eine kleinere Abstandsänderung der Endstücke realisiert werden, die bezüglich der zwischen den Endstücken durch die Längenänderung des Drahts ausgeübte Kraft eine Übersetzung, d. h. Erhöhung, bedeutet.

Zur Stabilität der Relativanordnung der Endstücke gegen Verkippen trägt es weiterhin bei, wenn die zwischen den Endstücken gespannten Längenabschnitte in radialen Abständen zu der Aktorhauptachse angeordnet werden, die im Bereich vom 0,5-fachen oder vorzugsweise Einfachen bis zum Dreifachen oder vorzugsweise Zweifachen einer Länge der Längenabschnitte zwischen den Endstücken liegen. Dabei kommt es auf die Länge der Längenabschnitte zwischen ihren Abstützungen an den Endstücken also in der Regel den Abstand der voneinander abgekehrten Seiten der Endstücke an. Der Aktor weist dann insgesamt einen verglichen mit seiner Länge zwischen den voneinander abgekehrten Seiten der Endstücke großen Durchmesser auf. Wie schon angedeutet wurde, kann die Formgedächtnislegierung des Drahts insbesondere so zusammengesetzt und trainiert sein, dass der Draht - insbesondere durch Anlegen einer elektrischen Spannung zwischen seinen Enden - auf eine thermisch bedingte Verkürzung ansteuerbar ist. Durch die Verkürzung des Drahts werden die Endstücke gegen die Kraft der Druckfeder zusammengeführt. Damit wird die Länge des Aktors zwischen seinen Endstücken verkürzt. Die Verkürzung des Drahts kann zum Beispiel dazu genutzt werden, eine Kraft, die die Druckfeder über die Endstücke des Aktors auf externe Bauteile ausübt, zurückzunehmen, indem sie ganz oder im Wesentlichen von dem Draht zwischen den Endstücken abgestützt wird. Durch die Verkürzung des Drahts kann darüber hinaus eine hohe Zugkraft zwischen den beiden Endstücken und daran befestigten Bauteilen aufgebracht werden.

Bezüglich ihrer Übergangstemperatur ist die Formgedächtnislegierung des Drahts an die Bedingungen anzupassen, unter denen der erfindungsgemäße Aktor zum Einsatz kommen soll. Die Übergangstemperatur der Formgedächtnislegierung sollte nur willentlich beim Ansteuern des Drahts auf seine Längenänderung überschritten werden. Umgekehrt sollte die Übergangstemperatur möglichst dicht über der höchsten Temperatur liegen, auf die die Formgedächtnislegierung auch ohne Ansteuerung des Drahts erwärmt wird, um sie beim Ansteuern des Drahts mit möglichst geringem Aufwand zu überschreiten. Wenn der Aktor beispielsweise keinen externen Erwärmungen über eine bestimmte Temperatur ausgesetzt ist, kann eine Formgedächtnislegierung ausgewählt werden, deren Übergangstemperatur ein paar Kelvin, d. h. beispielsweise 3 bis 10 Kelvin über der bestimmten Temperatur liegt.

Bei dem erfindungsgemäßen Aktor kann die Druckfeder so dimensioniert sein, dass sie den Draht, sobald er wieder unter die Übergangstemperatur seiner Formgedächtnislegierung abkühlt, wieder längt. So kehrt der Aktor in seine Ausgangsform zurück und kann auch in zwei Richtungen genutzt werden. Dies ist nicht möglich, wenn der Draht durch Anlegen einer elektrischen Spannung zwischen seinen Enden auf eine thermisch bedingte Verlängerung ansteuerbar ist, weil diese Längenänderung nach dem Abkühlen des Drahts durch die zwischen den Endstücken wirksame Druckfeder nicht zurückgeführt wird. Um die Druckfeder so zu dimensionieren, dass sie den Draht, sobald dieser wieder unter die Übergangstemperatur seiner Formgedächtnislegierung abkühlt, wieder auf seine Ausgangslänge längt, kann es sinnvoll sein, den Abstand von Abstützflächen der Druckfeder an den Endstücken und die Länge der Längenabschnitte des Drahts dadurch aufeinander abzustimmen, dass die Endstücke in Richtung der Aktorhauptachse in geeigneter Weise profiliert werden.

Die Formgedächtnislegierung des Drahts kann auch eine 2 Wege-Formgedächtnislegierung sein, so dass sich der Draht auch ohne die Einwirkung der Druckfeder wieder längt, sobald er wieder unter die Übergangstemperatur seiner Formgedächtnislegierung abkühlt. Bei einer 2 Wege-Formgedächtnislegierung kann alternativ die Erwärmung des Drahts über die Übergangstemperatur dazu führen, dass er sich längt, weil er sich dann aufgrund der Eigenschaften seiner 2 Wege-Formgedächtnislegierung auch gegen die Kraft der Druckfeder wieder verkürzen kann, sobald er wieder unter die Übergangstemperatur seiner Formgedächtnislegierung abkühlt.

Wenn der Draht mehrere parallel zueinander verlaufende und elektrisch parallel geschaltete Adern oder Teildrähte aufweist, wobei diese Teildrähte elektrisch gegeneinander isoliert sein können, aber nicht müssen und vorzugsweise auch nicht elektrisch gegeneinander isoliert sind, wird die Betriebssicherheit des Aktors in Bezug auf Brüche des Drahts bzw. eines seiner Teildrähte erhöht. Die dünneren Teildrähte werden bei ihren Richtungsänderungen im Bereich der Endstücke weniger stark mechanisch beansprucht und brechen daher weniger schnell als ein einziger Draht gleichen Gesamtquerschnitts. Wenn doch ein Bruch auftritt, tritt er mit höchster Wahrscheinlichkeit nur bei einem der Teildrähte auf und kann dann von den anderen Teildrähten überbrückt werden. Selbst wenn die Teildrähte elektrisch gegeneinander isoliert sind, kann die Bestromung und daraus resultierende Erwärmung der restlichen Teildrähte auch zur Erwärmung und der damit angestrebten Längenänderung eines gebrochenen Teildrahts führen. Die Teildrähte des Drahts können, müssen aber nicht miteinander verdrillt sein. Die Zahl der Teildrähte kann zwischen 2 und 6 oder zwischen 3 und 5, d. h. insbesondere vier betragen.

Die Druckfeder des erfindungsgemäßen Aktors kann mindestens eine Tellerfeder aufweisen. Vorzugsweise sind zwei Tellerfedern gegenläufig zwischen den Endstücken gestapelt. Dabei kann jede Tellerfeder in radialer Richtung zu der Aktorhauptachse an mindestens einem der Endstücke abgestützt sein. Diese Abstützung kann mit oder auch ohne Spiel ausgeführt sein, wobei Letzteres die Steifigkeit der elastischen Abstützung der Endstücke in Richtung der Aktorhauptachse aneinander erhöht.

Wie schon angesprochen wurde, kann es sinnvoll sein, den Abstand der Abstützflächen der Druckfeder an den Endstücken und die Länge der Längenabschnitte des Drahts aufeinander abzustimmen, indem die Endstücke in Richtung der Aktorhauptachse in geeigneter Weise profiliert werden. So kann zumindest eines der Endstücke ein Hutprofil aufweist, dessen Rand, an dem der Draht gespannt ist, in Richtung der Aktorhauptachse einen größeren Abstand zu dem anderen Endstück aufweist, als ein Mittelbereich, an dem sich die Druckfeder abstützt. Dadurch wird der Abstand der Abstützflächen der Druckfeder gezielt verringert bzw. die Länge der Längenabschnitte und damit deren absolute Längenänderung beim Ansteuern des Draht auf seine Längenänderung, d. h. der Hub des Aktors gezielt vergrößert.

In einer konkreten Ausführungsform des erfindungsgemäßen Aktors erstrecken sich miteinander fluchtende Durchgangsöffnungen parallel zu der Aktorhauptachse durch beide Endstücke Vorzugsweise erstrecken sich diese Durchgangsöffnungen, insbesondere wenn es die einzigen Durchgangsöffnungen des Aktors sind, jeweils um die Aktorhauptachse. Es können weitere miteinander fluchtende oder nur durch eines der Endstücke führende Durchgangsöffnungen vorhanden sein, beispielsweise für Lager- oder Führungselemente.

Die erfindungsgemäße Vorrichtung zum Spannen und Freigeben eines Bolzens weist eine Spannhülse zum Aufnehmen eines Abschnitts des Bolzens, einen Grundkörper, der eine Aufnahme mit in Tiefenrichtung abnehmendem freien Querschnitt zum Aufnehmen eines Teils der Spannhülse umfasst, und einen erfindungsmäßen Aktor auf. Dabei ist der erfindungsgemäße Aktor so zwischen der Spannhülse und einem an dem Grundkörper abgestützten Widerlager angeordnet, dass die Druckfeder die Spannhülse in die Aufnahme des Grundkörpers hinein beaufschlagt. Durch Ansteuern des Drahts des Aktors auf eine Längenänderung wird die Beaufschlagung der Spannhülse durch die Druckfeder variiert. Insbesondere wird die Beaufschlagung der Spannhülse durch die Druckfeder beim Ansteuern des Drahts auf eine Verkürzung so weit zurückgenommen, dass ein bis dahin in der Spannhülse gespannter Bolzen freigegeben wird.

Es versteht sich, dass bei der erfindungsgemäßen Vorrichtung wie auch bei jeder anderen Anwendung des erfindungsgemäßen Aktors mehrere erfindungsgemäße Aktuatoren in Reihe und/oder parallel geschaltet werden können, um die benötigten Kräfte und den benötigten Hub beim Ansteuern des Drahts auf die Längenänderung zu realisieren.

Die Kraft, die beim Beaufschlagen in die Aufnahme von der Druckfeder auf die Spannhülse ausgeübt wird, kann in grundsätzlich bekannter Weise übersetzt werden, indem der Aktor über eine kegelmantelabschnittförmige Innenoberfläche eines seiner Endstücke an einer kegelmantelabschnittförmige Außenoberfläche der Spannhülse angreift. Dabei weisen die beiden kegelmantelabschnittförmigen Oberflächen vorzugsweise gleiche Vollwinkel auf.

Unter der Spannhülse der erfindungsgemäßen Vorrichtung ist insbesondere eine elastisch verformbare Spannhülse, wie beispielweise eine aus Federstahl ausgebildete und in Längsrichtung mit Schlitzen versehene Spannhülse zu verstehen. Weiterhin ist es bevorzugt, wenn die Aufnahme in den Grundkörper durch eine einen ersten Vollwinkel aufweisende kegelmantelabschnittförmige Innenoberflächige des Grundkörpers begrenzt ist und der in der Aufnahme aufgenommene Teil der Spannhülse eine einen zweiten Vollwinkel aufweisende kegelmantelabschnittförmige Außenoberfläche aufweist, wobei der erste Vollwinkel und der zweite Vollwinkel gleich sind, so dass die Spannhülse mit ihrer Außenoberfläche großflächig an der Innenoberfläche des Grundkörpers anliegt und daran ausgerichtet wird bzw. beim Beaufschlagen der Spannhülse in die Aufnahme radial zusammengedrückt wird. Konkret können der erste Vollwinkel und der zweite Vollwinkel in einem Bereich von 10° bis 20° liegen. Damit sind einerseits hohe radiale Kräfte auf den zu spannenden Bolzen aufbringbar, und andererseits kann bereits durch eine Rückstellkraft der Spannhülse eine Bewegung der Spannhülse aus der Aufnahme initiiert werden, die zum Freigeben des Bolzens notwendig ist.

Besonders bevorzugt ist es aber, wenn das eine der Endstücke des Aktors in Richtung der Aktorhauptachse soweit an dem Widerlager festgelegt ist und das andere der Endstücke des Aktors in Richtung der Aktorhauptachse soweit an der Spannhülse festgelegt ist, dass die Spannhülse beim Ansteuern des Drahts auf eine Verkürzung ein Stück aus der Aufnahme in dem Grundkörper herausgezogen wird. So wird der Bolzen sicher freigegeben, wenn der Draht des Aktors auf eine Verkürzung angesteuert wird. Dies gilt wegen der großen Kraft, die mit dem Draht zwischen den Endstücken des Aktors hervorgerufen werden kann, auch bei höherer Haftreibung zwischen der Gleithülse und dem Grundkörper.

Konkret kann das andere der Endstücke des Aktors oder ein daran befestigtes Aktorelement radial einwärts zu der Aktorhauptachse in eine am Außenumfang der Spannhülse ausgebildete Ringnut eingreifen, um das andere der Endstücke des Aktors in Richtung der Aktorhauptachse an der Spannhülse festzulegen. Dabei kann dieser Eingriff durchaus Spiel aufweisen, solange die Spannhülse beim Ansteuern des Drahts auf eine Verkürzung für die Freigabe des Bolzens ausreichend weit aus der Aufnahme in dem Grundkörper herausgezogen wird.

In einer konkreten Ausführung der erfindungsgemäßen Vorrichtung ist das Widerlager ein an dem Grundkörper festgelegter, vorzugsweise ein auf den Grundkörper aufgesetzter und mit diesem verklebter Deckel, und der Deckel weist eine Deckelöffnung auf, die mit auf der Aktorhauptachse verlaufenden Durchgangsöffnungen des Aktors fluchtet, so dass sie einen Durchtritt des Bolzens durch den Deckel bis in die Spannhülse erlaubt. Grundsätzlich kann der Bolzen aber auch auf der dem Deckel gegenüberliegenden Seite des Grundkörpers durch eine Durchgangsöffnung austreten, die am Grund der Aufnahme des Grundkörpers für die Spannhülse vorgesehen ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Spannhülse die Rede ist, ist dies so zu verstehen, dass genau eine Spannhülse, zwei Spannhülsen oder mehr Spannhülsen vorhanden sind. Die in den Patentansprüchen angeführten Merkmale können durch weitere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine perspektivische Ansicht eines erfindungsgemäßen Aktors.
- **Fig. 2**: ist eine Explosionszeichnung des Aktors gemäß Fig. 1 aus derselben Perspektive wie in Fig. 1.
- **Fig. 3**: ist ein Längsschnitt durch eine erfindungsgemäße Vorrichtung mit dem Aktor gemäß den Fig. 1 und 2.
- **Fig. 4**: ist eine Explosionszeichnung der Vorrichtung gemäß Fig. 3.
- **Fig. 5**: ist eine Außenansicht der Vorrichtung gemäß Fig. 3 und 4 aus derselben Perspektive wie die Explosionszeichnung gemäß Fig. 4.
- **Fig. 6**: ist eine Explosionszeichnung wesentlicher Teile einer weiteren Ausführungsform der erfindungsgemäßen Vorrichtung mit einer weiteren Ausführungsform des erfindungsgemäßen Aktors; und
- **Fig. 7**: ist ein Längsschnitt durch die erfindungsgemäße Vorrichtung gemäß Fig. 6.

### FIGUREN BESCHREIBUNG

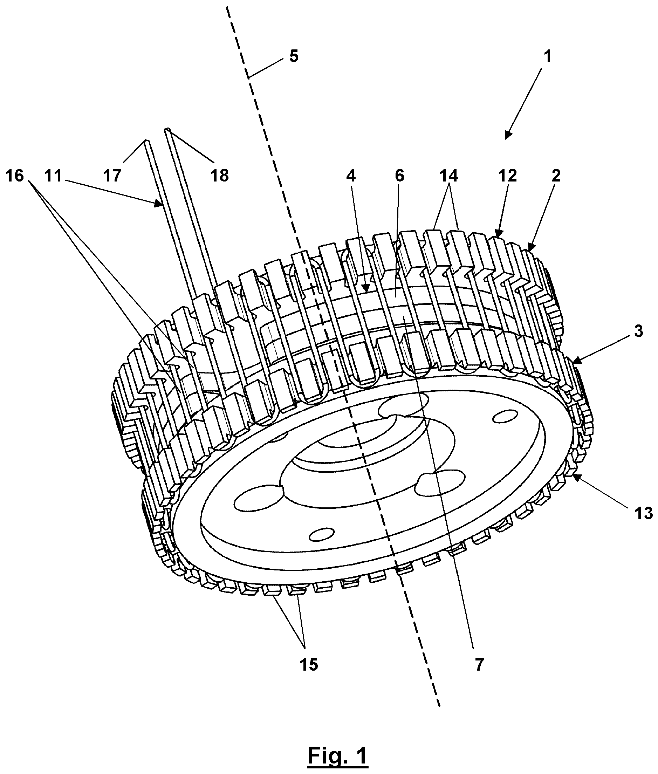

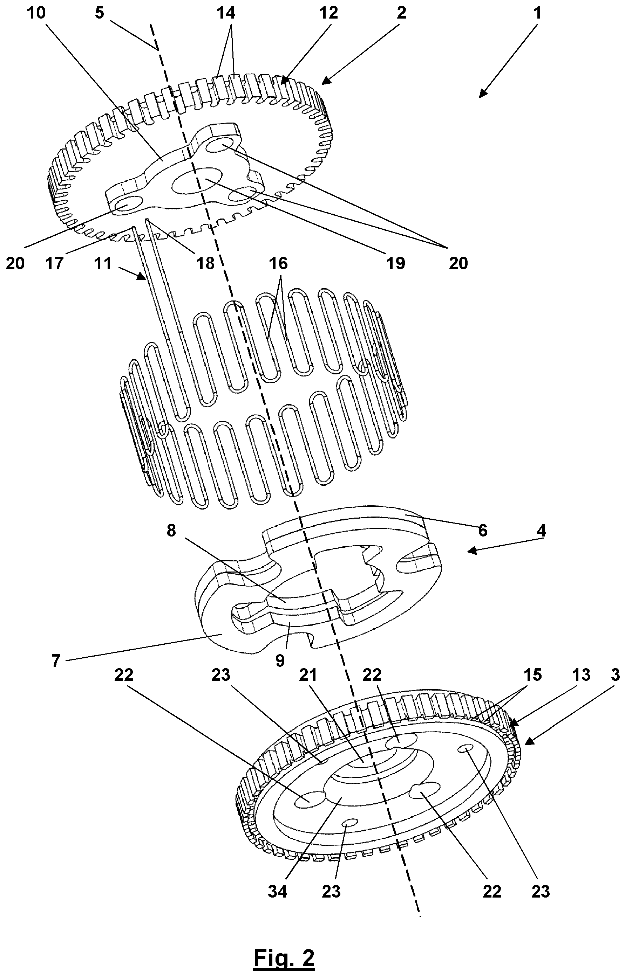

Der in den **Fig. 1** **und** **2** dargestellte Aktor 1 weist zwei Endstücke 2 und 3 auf, die durch eine Druckfeder 4 in Richtung einer Aktorhauptachse 5 elastisch aneinander abgestützt sind. Die Druckfeder 4 ist hier aus zwei längs der Aktorhauptachse 5 gegenläufig gestapelten Tellerfedern 6 und 7 aufgebaut. Die Tellerfedern 6 und 7 weisen innere Abstützflächen 8 und 9 auf, über die sie sich in radialer Richtung zu der Aktorhauptachse 5 an Gegenflächen 10 an den Endstücken 2 und 3 abstützen. Von den Gegenflächen 10 ist nur diejenige des Endstücks 2 in Fig. 2 zu sehen. Weiterhin ist zwischen den Endstücken 2 und 3 ein Draht 11 aus einer Formgedächtnislegierung gespannt. Konkret sind an äußeren Umfängen 12 und 13 der Endstücke 2 und 3 Haken 14 und 15 ausgebildet, um die der Draht 11 wechselweise herumgeführt ist. Zwischen den Haken 14 und 15 verlaufen Längenabschnitte 16 des Drahts 11. In der vorliegenden Ausführungsform des Aktors 1 verlaufen die Längenabschnitte 16 parallel zu der Aktorhauptachse 5. In dem konkreten Ausführungsbeispiel gemäß den Fig. 1 und 2 beträgt die Anzahl der Längenabschnitte 16 50. Mindestens beträgt sie 4, bevorzugt mindestens 6, mehr bevorzugt mindestens 12, noch mehr bevorzugt mindestens 24 und am meisten bevorzugt mindestens 36. Die Längenabschnitte 16 sind Teile des durchlaufenden Drahts 11 und hängen somit zusammen. Beim Anlegen einer elektrischen Spannung zwischen den Enden 17 und 18 des Drahts 11 fließt ein Strom durch den Draht 11, der den Draht 11 aufgrund des elektrischen Widerstands des Drahts 11 erwärmt. Wenn bei dieser Erwärmung die Übergangstemperatur der Formgedächtnislegierung des Drahts 11 überschritten wird, zieht sich der Draht 11 zusammen. Dadurch werden die Endstücke 2 und 3 entgegen ihrer elastischen Abstützung durch die Druckfeder 4 aufeinander zu bewegt. Mit anderen Worten verkürzt sich die Länge des Aktors 1 längs der Aktorhauptachse 5. Bereits ohne die thermisch bedingte Längenverkürzung des Drahts 11 können die Längenabschnitte 16 des Drahts 11 zwischen den Endstücken 2 und 3 unter einer Vorspannung stehen, die von der Druckfeder 4 aufgebracht wird. Wie insbesondere aus Fig. 1 zu sehen ist, ist der Durchmesser der Umfänge 12 und 13 der Endstücke 2 und 3 etwa dreimal so groß wie die Höhe des Aktors 1 längs der Aktorhauptachse 5. Entsprechend sind die Abstände der Längenabschnitte 16 zu der Aktorhauptachse 5 etwa eineinhalbmal so groß wie die Längen der Längenabschnitte 16. Hieraus und aus der großen Anzahl der Längenabschnitte 16, die in 50-fach drehsymmetrischer Anordnung um die Aktorhauptachse 5 angeordnet sind, wird eine hohe Stabilisierung der Endstücke 2 und 3 gegenüber wechselseitigen Verkippungen relativ zu der Aktorhauptachse 5 erreicht. Die hohe Anzahl der Längenabschnitte 16 stellt zudem eine hohe Kraft bereit, mit der die Endstücke 2 und 3 aufeinander zubewegt werden, wenn der Draht 11 über die Übergangstemperatur seiner Formgedächtnislegierung erwärmt wird. Für dieses Erwärmen reicht ein vergleichsweise kleiner Strom durch den Draht 11 mit geringem Querschnitt aus. Zum mechanischen Anschluss des Aktors 1 sind in den Endstücken 2 und 3 Durchgangsöffnungen 19 und 20 bzw. 21 und 22 vorgesehen, wobei die zentrale Durchgangsöffnung 19 in dem Endstück 2 mit der zentralen Durchgangsöffnung 21 in dem Endstück 3 fluchtet und die weiteren Durchgangsöffnungen 20 in dem Endstück 2 jeweils mit einer der weiteren Durchgangsöffnungen 22 in dem Endstück 3 fluchten. Dabei sind die Tellerfedern 6 und 7 so ausgeformt, dass sie die Flucht zwischen den Durchgangsöffnungen 19 und 20 einerseits und 21 und 22 andererseits nicht versperren. In dem Endstück 3 sind weiterhin Befestigungslöcher 23 vorgesehen.

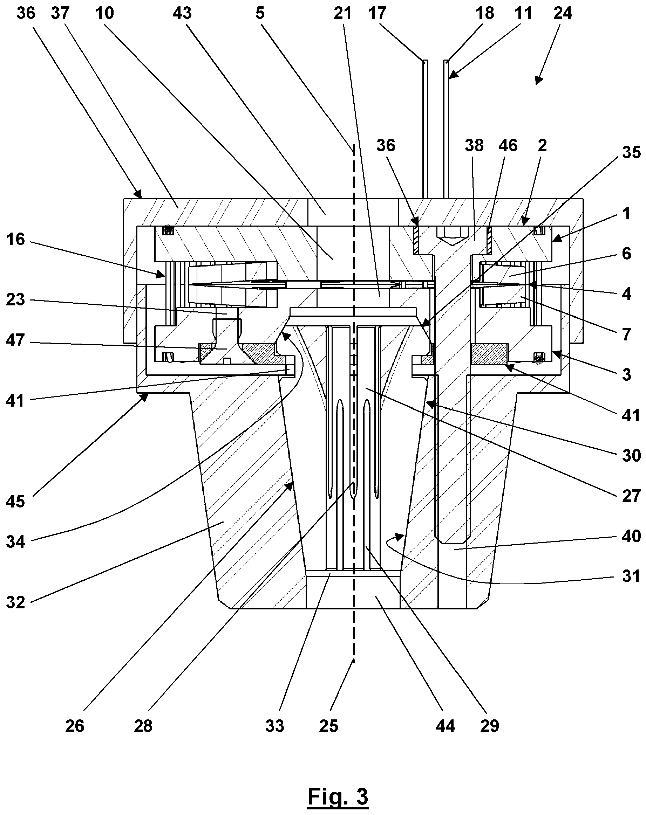

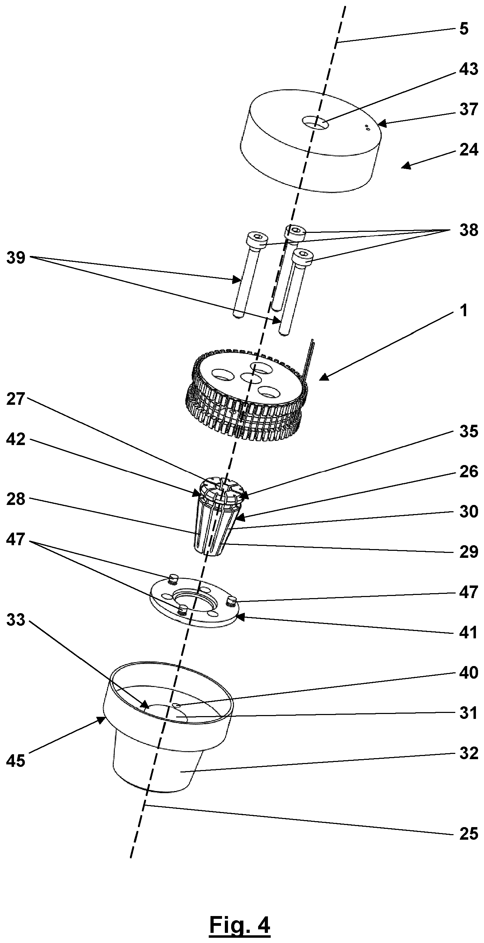

Die **Fig. 3** **und** **4** zeigen den Aktor 1 als Teil einer Vorrichtung 24 zum kontrollierten Spannen und Freigeben eines längs einer Vorrichtungshauptachse 25, die mit der Aktorhauptachse 5 zusammenfällt, einführbaren, hier aber nicht dargestellten Bolzens. Eine Spannhülse 26 ist zum spannenden Aufnehmen eines Abschnitts des Bolzens vorgesehen. Dabei weist sie eine zylindermantelabschnittförmige Innenoberfläche 27 zur Anlage an einer zylindermantelabschnittförmigen Außenoberfläche des Abschnitts des Bolzens auf. Die Spannhülse 26 ist aus Federstahl ausgebildet und mit Schlitzen 28 und 29 versehen, so dass sie unter Verringerung des Durchmessers ihrer Innenoberfläche 27 elastisch zusammendrückbar ist und sich unter Vergrößerung des Durchmessers ihrer Innenoberfläche 27 wieder elastisch aufweitet. Eine Außenoberfläche 30 der Spannhülse ist kegelmantelabschnittförmig und liegt an einer ebenfalls kegelmantelabschnittförmigen Innenoberfläche 31 eines Grundkörpers 32 der Vorrichtung 24 an. Wenn die Spannhülse weiter in eine durch die Innenoberfläche 31 begrenzte Aufnahme 33 in dem Grundkörper 32 hineingedrückt wird, wird sie radial zu der Vorrichtungshauptachse 25 zusammengedrückt, und der Innendurchmesser ihrer Innenoberfläche 27 wird kleiner bzw. die Innenoberfläche 27 legt sich mit einer radialen Spannkraft an die Außenoberfläche des zu spannenden Bolzens an. Hineingedrückt wird die Spannhülse 26 von dem Aktor 1, konkret von dessen einen Endstück 3, das über eine kegelmantelabschnittförmige Innenoberfläche 34 an einer kegelmantelabschnittförmigen Außenoberfläche 35 der Spannhülse 26 anliegt. Über diese kegelmantelabschnittförmigen Oberflächen 34 und 35 wird eine Kraftübersetzung der Kraft erzielt, mit der das Endstück 3 über die Druckfeder 4 aus den Tellerfedern 6 und 7 elastisch an dem anderen Endstück 2 abgestützt ist. Das andere Endstück 2 stützt sich seinerseits an einem Widerlager 36 in Form eines auf den Grundkörper 32 aufgesetzten und mit dem Grundkörper 32 verklebten Deckels 37 ab, durch den die Enden 17 und 18 des Drahts 11 hindurchtreten. Durch die Durchgangslöcher 20 und 22 in den Endstücken 2 und 3 sind Schrauben 39 in Gewindebohrungen 40 in dem Grundkörper 32 eingeschraubt. An dem Endstück 2 anliegende Schraubenköpfe 38 der Schrauben 39 dienen als weitere Widerlager 36 dienen. Außerdem ist der Aktor 1 gegenüber dem Grundkörper 32 und der Spannhülse 26 durch Verdrehen der Schrauben 39, um sie unterschiedlich weit in die Gewindebohrungen 40 einzuschrauben, präzise mit seiner Aktorhauptachse 5 auf die Vorrichtungshauptachse 25 und in Richtung der Vorrichtungshauptachse 25 ausrichtbar. Wenn das Endstück 3 mit Klebstoff 46 mit den Schraubköpfen 38 verklebt wird, wird nicht nur die eingestellte Ausrichtung des Aktors 1 fixiert, sondern die Schraubenköpfe 38 der Schrauben 39 können auch als Widerlager 36 für das Endstück 2 dienen, wenn sich der Aktor 1 beim Ansteuern des Drahts 11 auf eine Verkürzung der Längenabschnitte 16 längs der Aktorhauptachse zusammenzieht. Mit dem Deckel 37 kann das Endstück 2 ebenfalls verklebt sein, so dass sich das Endstück 2 in Zugrichtung auch an dem Deckel 37 abstützen kann. Die Abstützung in Zugrichtung ist erforderlich, um die Spannhülse 24 beim Ansteuern des Drahts 11 auf eine Verkürzung der Längenabschnitte 16 mit einem Aktorelement 41 aus der Aufnahme 33 etwas herauszuziehen, um den in der Spannhülse 26 gespannten Bolzen definitiv freizugeben.

Das Aktorelement 41 greift in eine Ringnut 42 ein, die außerhalb der Aufnahme 33 am Außenumfang der Spannhülse 26 ausgebildet ist. Das Aktorelement 41 ist dabei an dem Endstück 3 befestigt, beispielsweise mit Befestigungsschrauben, die in die Befestigungslöcher 23 eingreifend, und/oder mit hier nicht separat dargestelltem Klebstoff verschraubt. Der zu spannende und definiert freizugebende Bolzen kann durch eine zentrale Deckelöffnung 43 in dem Deckel 37, die mit den Durchgangsöffnungen 19 und 21 in den Endstücken 2 und 3 fluchtet, in die Spannhülse 26 eingeführt werden, oder durch eine Durchgangsöffnung 44 am Grund der Aufnahme 33 von der gegenüberliegenden Seite des Grundkörpers 32. Der Bolzen kann dann problemlos in die Spannhülse 26 eingeführt werden, wenn der Draht 11 über die Übergangstemperatur seiner Formgedächtnislegierung erwärmt ist. Nach Abkühlen des Drahts 11 unter die Übergangstemperatur seiner Formgedächtnislegierung längt die Druckfeder 4 die Längenabschnitte 16 des Drahts 11. Dann wirkt die Druckfeder 4 wieder auf die Spannhülse 26 ein und drückt sie in die Aufnahme 33. Dadurch wird die Spannhülse 26 radial zusammengedrückt und der Bolzen in der Spannhülse 26 gespannt. Beim erneuten Erwärmen des Drahts 11 über die Übergangstemperatur seiner Formgedächtnislegierung wird der Bolzen wieder freigegeben. Dieser Vorgang ist beliebig oft wiederholbar.

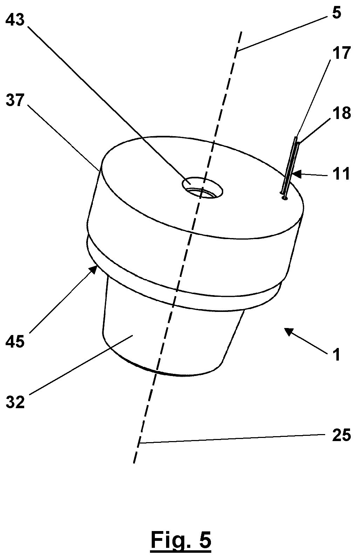

**Fig. 5** zeigt die kompakten Abmessungen der Vorrichtung 1 im zusammengebauten Zustand. Am Grundkörper 32 der Vorrichtung 1 können neben der hier vorgesehen Stufe 45 problemlos weitere Abstütz- oder Befestigungskonturen ausgebildet werden, um den Grundkörper an einer übergeordneten Struktur festzulegen.

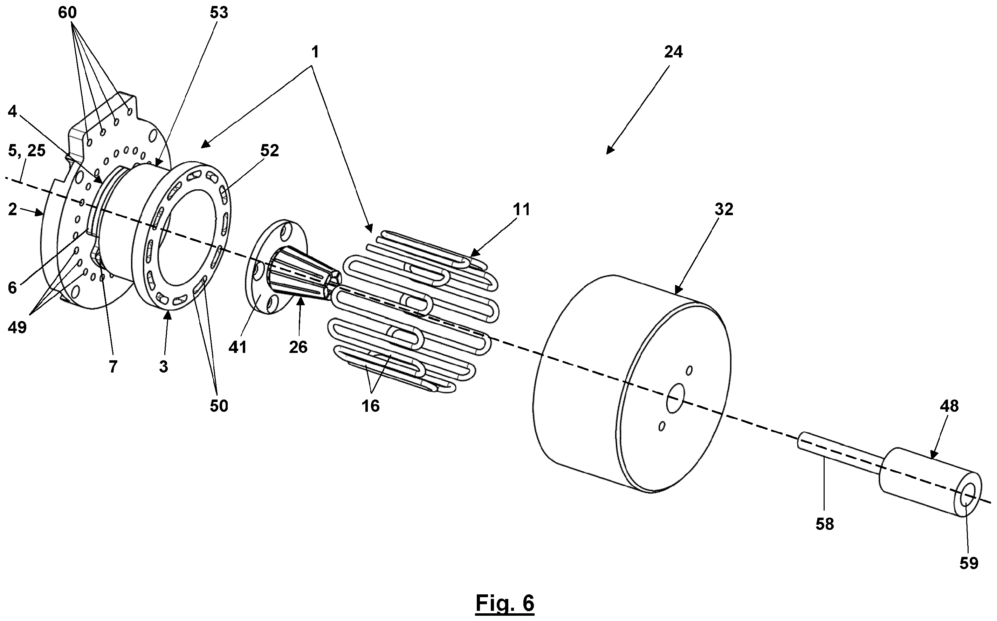

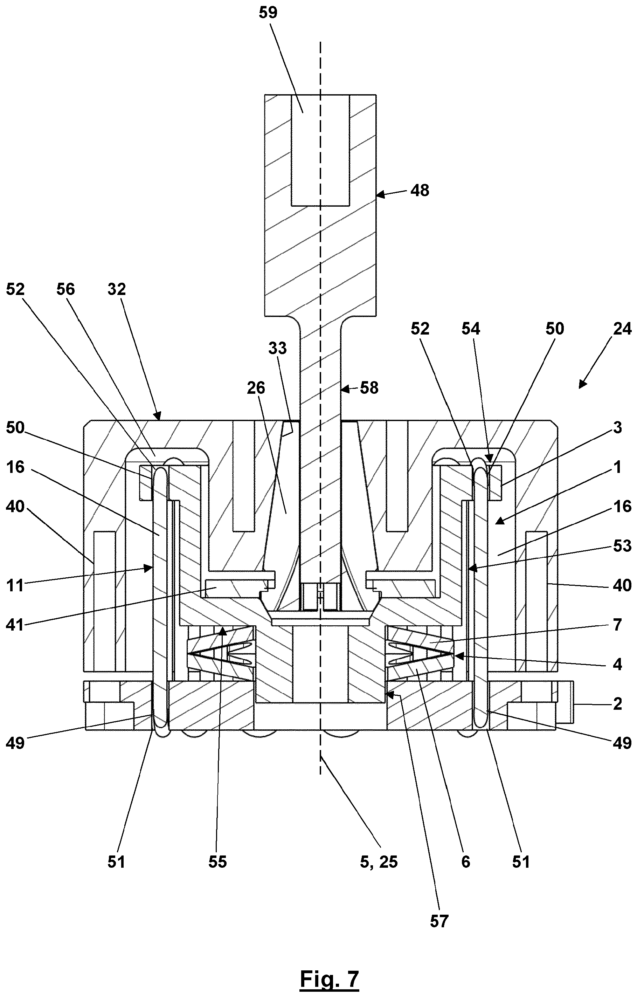

Die in **Fig. 6** **und** **7** dargestellte Ausführungsform der erfindungsgemäßen Vorrichtung 24 dient zum kontrollierten Spannen und Freigeben eines längs der Vorrichtungshauptachse 25, die auch hier mit der Aktorhauptachse 5 zusammenfällt, einführbaren und hier dargestellten Bolzens 48. Die Vorrichtung 24 gemäß Fig. 6 und 7 umfasst eine Ausführungsform des Aktors 1 mit folgenden Besonderheiten. Der Draht 11 aus der Formgedächtnislegierung verläuft durch Löcher 49 und 50 in den Endstücken 2 und 3, die paarweise durch kurze in Umfangsrichtung verlaufende Nuten 51 und 52 in den voneinander abgekehrten Stirnseiten der Endstücke 2 und 3 miteinander verbunden sind. Zusätzliche Löcher 60 in dem Endstück 2 dienen zum endseitigen Festlegen des Drahts 11 an dem Endstück 2. Nicht unmittelbar aus den Fig. 6 und 7 zu entnehmen ist, dass der Draht 11 hier aus mehreren parallel zueinander verlaufenden Teildrähten besteht, die auch elektrisch parallel geschaltet sind. Das Endstück 3 weist ein Hutprofil 53 auf, dessen Rand 54, an dem der Draht 11 festgelegt ist, in Richtung der Aktorhauptachse 5 einen größeren Abstand zu dem anderen Endstück 2 aufweist, als dessen Mittelbereich 54, an dem sich die Druckfeder 4 abstützt. Auf diese Weise sind Längenabschnitte 16 des Drahts 11 zwischen den Endstücken 2 und 3 verglichen mit der axialen Erstreckung der Druckfeder 4 vergleichsweise lang, um einen ausreichenden Hub des Aktors 1 bei begrenzter prozentualer Längenänderung des Drahts 11 aus der Formgedächtnislegierung zu realisieren. Der Rand 54 des Hutprofils 53 des Endstücks 3 taucht in eine um die Vorrichtungshauptachse 25 in dem Grundkörper 32 verlaufende Ringnut 56 ein, woraus ein in axialer Richtung besonders kompakter Aufbau der Vorrichtung 24 resultiert. Die wirksame Länge der Längenabschnitte 16 zwischen den Endstücken 2 und 3 ist hier etwas größer als der radiale Abstand der Längenabschnitte 16 zu der Aktorhauptachse 5, aber deutlich kleiner als der Durchmesser von Kreisbögen um die Aktorhauptachse 5, auf denen die Löcher 49 und 50 in den Endstücken 2 und 3 angeordnet sind. In Verbindung mit der Vielzahl der hier 24 Längenabschnitte 16 ergibt sich eine inhärente Führung der Endstücke 2 und 3 aneinander, ohne dass eine zusätzliche Linearführung in Richtung der Aktorhauptachse 5 vorhanden ist. Für eine Linearführung in Richtung der Aktorhauptachse 5 reicht die kurze axiale Überlappung 57 zwischen den Endstücken 2 und 3 nicht aus. Der Bolzen 48 ist hier mit einem zylindrischen Schaft 58 von dem dem Endstück 2 abgekehrten Ende des Grundkörpers 32 her in die Spannhülse 26 eingeführt, die in der konischen Aufnahme 33 des Grundkörpers 32 sitzt. An seinem freien Ende weist der Bolzen 48 eine Befestigungsanordnung 59, beispielsweise ein Innengewinde, zum Befestigen eines durch Freigabe des Bolzens 48 freizusetzenden Objekts auf. In die Gewindebohrungen 40 eingeschraubte Befestigungsschrauben 47 sind in den Fig. 6 und 7 nicht dargestellt, aber grundsätzlich vorhanden. Die Formgedächtnislegierung des Drahts 11 kann eine 2-Wege-Formgedächtnislegierung sein, so dass sich der Draht 11 beim erneuten Unterschreiten der Übergangstemperatur der Formgedächtnislegierung auch ohne Einwirken der Druckfeder 4 wieder längt. Hierdurch sind größere Freiheiten bei der Abstimmung der Federkonstanten der Druckfeder 4 gegeben. Zudem weist der Aktor 1 eine höhere Funktionalität auf, die in anderen Anwendungen des Aktors 1 als in der hier gezeigten Vorrichtung 24 genutzt werden können.

### BEZUGSZEICHENLISTE

- 1: Aktor
- 2: Endstück
- 3: Endstück
- 4: Druckfeder
- 5: Aktorhauptachse
- 6: Tellerfeder
- 7: Tellerfeder
- 8: Abstützfläche
- 9: Abstützfläche
- 10: Gegenfläche
- 11: Draht
- 12: Umfang
- 13: Umfang
- 14: Haken
- 15: Haken
- 16: Längenabschnitt
- 17: Ende
- 18: Ende
- 19: Durchgangsöffnung
- 20: Durchgangsöffnung
- 21: Durchgangsöffnung
- 22: Durchgangsöffnung
- 23: Befestigungsloch
- 24: Vorrichtung
- 25: Vorrichtungshauptachse
- 26: Spannhülse
- 27: Innenoberfläche
- 28: Schlitz
- 29: Schlitz
- 30: Außenoberfläche
- 31: Innenoberfläche
- 32: Grundkörper
- 33: Aufnahme
- 34: Innenoberfläche
- 35: Außenoberfläche
- 36: Widerlager
- 37: Deckel
- 38: Schraubenkopf
- 39: Schraube
- 40: Gewindebohrung
- 41: Aktorelement
- 42: Ringnut
- 43: Deckelöffnung
- 44: Durchgangsöffnung
- 45: Stufe
- 46: Klebstoff
- 47: Befestigungsschraube
- 48: Bolzen
- 49: Loch
- 50: Loch
- 51: Nut
- 52: Nut
- 53: Hutprofil
- 54: Rand
- 55: Mittelbereich
- 56: Ringnut
- 57: Überlappung
- 58: Schaft
- 59: Befestigungsanordnung
- 60: Loch

## Patentansprüche

1. Aktor (1) mit
- zwei in Richtung einer Aktorhauptachse (5) elastisch aneinander abgestützten Endstücken (2, 3) und
- einem längs der Aktorhauptachse (5) zwischen den Endstücken (2, 3) gespannten Draht (11) aus einer Formgedächtnislegierung, der auf eine Längenänderung ansteuerbar ist,
- wobei der Draht (11) mindestens sechs zusammenhängende Längenabschnitte (16) aufweist, die nebeneinander jeweils längs der Aktorhauptachse (5) zwischen den Endstücken (2, 3) gespannt sind, und
- wobei die zwischen den Endstücken (2, 3) gespannten Längenabschnitte (16) unter gleich großen Winkeln zu einer Bezugsfläche verlaufen, zu der die Aktorhauptachse (5) eine Flächennormale ist,
**dadurch gekennzeichnet, dass** die Endstücke (2, 3) durch eine Druckfeder (4) elastisch aneinander abgestützt sind und dass die Längenabschnitte (16) zwischen Punkten der Endstücke (2, 3) gespannt sind, die jeweils längs eines Kreisbogens um die Aktorhauptachse (5) herum angeordnet sind, wobei die Längenabschnitte (16) bezüglich der Aktorhauptachse (5) achsen- und/oder drehsymmetrisch zueinander angeordnet sind.

2. Aktor (1) nach Anspruch 1, **dadurch gekennzeichnet, dass** der Draht (11) mindestens 12, bevorzugt mindestens 24 und noch mehr bevorzugt mindestens 36 zusammenhängende Längenabschnitte (16) aufweist, die jeweils längs der Aktorhauptachse (5) zwischen den Endstücken (2, 3) gespannt sind.

3. Aktor (1) nach einem der vorhergehenden Ansprüche, **dadurch gekennzeichnet, dass** die Endstücke (2, 3) ausschließlich durch die Druckfeder (4) und den Draht (11) aneinander abgestützt sind.

4. Aktor (1) nach einem der vorhergehenden Ansprüche, **dadurch gekennzeichnet, dass** die gleich großen Winkel zu der Bezugsfläche 80° bis 90°, vorzugsweise 85° bis 90° und mehr bevorzugt 90° betragen.

5. Aktor (1) nach einem der vorhergehenden Ansprüche, **dadurch gekennzeichnet, dass** die zwischen den Endstücken (2, 3) gespannten Längenabschnitte (16) in Abständen zu der Aktorhauptachse (5) angeordnet sind, die im Bereich vom 0,5-fachen oder Einfachen bis zum zweifachen oder Dreifachen einer Länge der Längenabschnitte (16) zwischen den Endstücken (2, 3) liegen und/oder dass im Falle einer Drehsymmetrie der Längenabschnitte (16) bezüglich der Aktorhauptachse (5) die Anordnung der zwischen den Endstücken (2, 3) gespannten Längenabschnitte (16) bezüglich der Aktorhauptachse (5) halb so vielfach drehsymmetrisch ist und vorzugsweise so vielfach drehsymmetrisch ist, wie Längenabschnitte (16) zwischen den Endstücken (2, 3) gespannt sind.

6. Aktor (1) nach einem der vorhergehenden Ansprüche, **dadurch gekennzeichnet, dass** die Druckfeder (4) mindestens eine Tellerfeder (6, 7), vorzugsweise zwei gegenläufig gestapelte Tellerfedern (6, 7) aufweist, wobei jede Tellerfeder (6, 7) vorzugsweise in radialer Richtung zu der Aktorhauptachse (5) an mindestens einem der Endstücke (2, 3) abgestützt ist, wobei optional zumindest eines der Endstücke (3) ein Hutprofil (53) aufweist, dessen Rand (54), an dem der Draht (11) gespannt ist, in Richtung der Aktorhauptachse (5) einen größeren Abstand zu dem anderen Endstück (2) aufweist, als ein Mittelbereich (55), an dem sich die Druckfeder (4) abstützt.

7. Aktor (1) nach einem der vorhergehenden Ansprüche, **dadurch gekennzeichnet,**
- **dass** der Draht (11) zwischen seinen Längenabschnitten (16) über Haken (14, 15) herum geführt ist, die an den Umfängen (12, 13) beider Endstücke (2, 3) angeordnet sind, oder
- **dass** der Draht (11) durch Löcher in den Endstücken (2, 3) hindurch geführt ist, wobei der Draht (11) zwischen benachbarten Löchern in den Endstücken (2, 3) seine Richtung umkehrt.

8. Aktor (1) nach einem der vorhergehenden Ansprüche, **dadurch gekennzeichnet, dass** der Draht (11) durch Anlegen einer elektrischen Spannung zwischen seinen Enden (17, 18) auf eine thermisch bedingte Verkürzung ansteuerbar ist, wobei die Druckfeder (4) optional so dimensioniert ist, dass sie den Draht (11) wieder längt, sobald er wieder unter die Übergangstemperatur seiner Formgedächtnislegierung abkühlt und/oder dass die Formgedächtnislegierung eine 2 Wege- Formgedächtnislegierung ist.

9. Aktor (1) nach einem der vorhergehenden Ansprüche, **dadurch gekennzeichnet, dass** der Draht (11) mehrere parallel zueinander verlaufende und elektrisch parallel geschaltete Adern aufweist.

10. Aktor (1) nach einem der vorhergehenden Ansprüche, **dadurch gekennzeichnet, dass** sich miteinander fluchtende Durchgangsöffnungen (19-22) parallel zu der Aktorhauptachse (5) durch beide Endstücke erstrecken, wobei sich die Durchgangsöffnungen (19, 21) vorzugsweise jeweils um die Aktorhauptachse (5) erstrecken.

11. Vorrichtung (24) zum Spannen und Freigeben eines Bolzens mit
- einer Spannhülse (26) zum Aufnehmen eines Abschnitts des Bolzens,
- einem Grundkörper (32), der eine Aufnahme (33) mit in Tiefenrichtung abnehmendem freien Querschnitt zum Aufnehmen eines Teils der Spannhülse (26) aufweist, und
- einem Aktor (1) nach einem der vorhergehenden Ansprüche,
wobei der Aktor (1) so zwischen der Spannhülse (26) und einem an dem Grundkörper (32) abgestützten Widerlager (36) angeordnet ist, dass die Druckfeder (4) die Spannhülse (26) in die Aufnahme (33) des Grundkörpers (32) hinein beaufschlagt.

12. Vorrichtung (24) nach Anspruch 11, **dadurch gekennzeichnet, dass** die Aufnahme (33) durch eine einen ersten Vollwinkel aufweisende kegelmantelabschnittförmige Innenoberfläche (31) des Grundkörpers (32) begrenzt ist und der in der Aufnahme (33) aufgenommene Teil der Spannhülse (26) eine einen zweiten Vollwinkel aufweisende kegelmantelabschnittförmige Außenoberfläche (30) aufweist, wobei der erste Vollwinkel und der zweite Vollwinkel gleich sind, wobei der erste Vollwinkel und der zweite Vollwinkel vorzugsweise in einem Bereich von 10° bis 20° liegen.

13. Vorrichtung (24) nach Anspruch 11 oder 12, **dadurch gekennzeichnet, dass** das eine der Endstücke (2) des Aktors (1) in Richtung der Aktorhauptachse (5) soweit an dem Widerlager (36) festgelegt ist und das andere der Endstücke (3) des Aktors (1) in Richtung der Aktorhauptachse (5) soweit an der Spannhülse (26) festgelegt ist, dass die Spannhülse (26) beim Ansteuern des Drahts (11) auf eine Verkürzung ein Stück aus der Aufnahme (33) in dem Grundkörper (32) heraus gezogen wird.

14. Vorrichtung (24) nach Anspruch 13, **dadurch gekennzeichnet, dass** das andere der Endstücke (3) des Aktors (1) oder ein daran befestigtes Aktorelement (41) radial einwärts zu der Aktorhauptachse (5) in eine am Außenumfang der Spannhülse (26) ausgebildete Ringnut (42) eingreift.

15. Vorrichtung (24) nach einem der Ansprüche 11 bis 14, **dadurch gekennzeichnet, dass** das Widerlager (36) einen an dem Grundkörper (32) festgelegten, vorzugsweise einen auf den Grundkörper (32) aufgesetzten und mit dem Grundkörper verklebten Deckel (37) aufweist, wobei der Deckel (37) vorzugsweise eine Deckelöffnung (43) aufweist, die mit auf der Aktorhauptachse (5) verlaufenden Durchgangsöffnungen (19, 21) des Aktors (1) fluchtet, so dass sie einen Durchtritt des Bolzens durch den Deckel (37) bis in die Spannhülse (26) erlaubt.

## Claims

1. An actuator (1), comprising
- two end pieces (2, 3) elastically supported against one another in the direction of an actuator main axis (5), and
- a wire (11) made of a shape memory alloy, which is tensioned between the end pieces (2, 3) along the actuator main axis (5) and is controllable to implement a change in length,
- wherein the wire (11) has at least six contiguous length sections (16), each being tensioned next to one another between the end pieces (2, 3) along the actuator main axis (5), and
- wherein the length sections (16) tensioned between the end pieces (2, 3) extend at equally sized angles relative to a reference plane to which the actuator main axis (5) is a surface normal,
**characterized in that** the end pieces (2, 3) are elastically supported against one another by a compression spring (4), and **in that** the length sections (16) are tensioned between points of the end pieces (2, 3) which are respectively arranged along a circular arc around the actuator main axis (5), wherein the length sections (16) are arranged with regard to one another in an axially symmetric and/or a rotationally symmetric way with respect to the actuator main axis (5).

2. The actuator (1) according to claim 1, **characterized in that** the wire (11) has at least 12, preferably at least 24, and more preferably at least 36 contiguous length sections (16), which are respectively tensioned along the actuator main axis (5) between the end pieces (2, 3).

3. The actuator (1) according to any of the preceding claims, **characterized in that** the end pieces (2, 3) are supported against one another exclusively by the compression spring (4) and the wire (11).

4. The actuator (1) according to any of the preceding claims, **characterized in that** the equally sized angles relative to the reference plane are between 80° and 90°, preferably between 85° and 90°, and more preferably 90°.

5. The actuator (1) according to any of the preceding claims, **characterized in that** the length sections (16) tensioned between the end pieces (2, 3) are arranged at distances from the actuator main axis (5) which are in a range from 0.5 times or one times to two times or three times a length of the length sections (16) between the end pieces (2, 3), and/or **in that**, in the case of rotational symmetry of the length sections (16) with respect to the actuator main axis (5), the arrangement of the length sections (16) tensioned between the end pieces (2, 3) is half as many times rotationally symmetric and preferably as many times rotationally symmetric with respect to the actuator main axis (5) as length portions (16) are tensioned between the endpieces (2, 3)

6. Actuator (1) according to any of the preceding claims, **characterized in that** the compression spring (4) comprises at least one cup spring (6, 7), preferably two oppositely stacked cup springs (6, 7), wherein each cup spring (6, 7) is preferably supported against at least one of the end pieces (2, 3) in a radial direction with respect to the actuator main axis (5), wherein, optionally, at least one of the end pieces (3) has a hat-shaped profile (53), the rim (54) of which, at which the wire (11) is tensioned, has a larger distance to the other end piece (2) in the direction of the actuator main axis (5) than a central portion (55) against which the compression spring (4) is supported.

7. Actuator (1) according to any of the preceding claims, **characterized in**
- **that** the wire (11), between its length portions (16), is guided around hooks (14, 15) arranged at the circumferences (12, 13) of both end pieces (2, 3), or
- **that** the wire (11) is guided through holes in the end pieces (2, 3), wherein the wire (11) reverses its direction between neighbouring holes in the end pieces (2, 3).

8. Actuator (1) according to any of the preceding claims, **characterized in that** the wire (11) can be controlled to implement a thermally induced shortening by applying an electrical voltage between its ends (17, 18), wherein the compression spring (4) is optionally dimensioned such that it re-elongates the wire (11) as soon as it has cooled down again below the transition temperature of its shape memory alloy, and/or wherein the shape memory alloy is a two-way shape memory alloy.

9. Actuator (1) according to any of the preceding claims, **characterized in that** the wire (11) comprises a plurality of strands extending parallel to one another and electrically connected in parallel.

10. Actuator (1) according to any of the preceding claims, **characterized in that** aligned through-openings (19-22) extend through both end pieces parallel to the actuator main axis (5), wherein the through-openings (19, 21) each preferably extend around the actuator main axis (5).

11. Device (24) for clamping and releasing a bolt, comprising
- a clamping sleeve (26) for receiving a portion of the bolt,
- a base body (32) that comprises a receptacle (33) for receiving a part of the clamping sleeve (26), the receptacle (33) having a free cross section decreasing in a depth direction, and
- an actuator (1) according to any of the preceding claims,
wherein the actuator (1) is arranged between the clamping sleeve (26) and a counter-bearing (36) supported against the base body (32) such that the compression spring (4) presses the clamping sleeve (26) into the receptacle (33) of the base body (32).

12. Device (24) according to claim 11, **characterized in that** the receptacle (33) is delimited by an inner surface (31) of the main body (32) that is shaped like a section of an envelope of a cone having a first full angle and **in that** the part of the clamping sleeve (26) which is received in the receptacle (33) has an outer surface (30) that is shaped like a section of an envelope of a cone having a second full angle, wherein the first full angle and the second full angle are equal, and wherein the first full angle and the second full angle are preferably in a range from 10° to 20°.

13. Device (24) according to claim 11 or 12, **characterized in that** one of the end pieces (2) of the actuator (1) is fixed to the counter-bearing (36) in the direction of the actuator main axis (5) to such an extent and the other one of the end pieces (3) of the actuator (1) is fixed to the clamping sleeve (26) in the direction of the actuator main axis (5) to such an extent that the clamping sleeve (26), when the wire (11) is controlled to implement a shortening, is pulled out of the receptacle (33) in the base body (32) over some distance.

14. Device (24) according to claim 13, **characterized in that** the other one of the end pieces (3) of the actuator (1), or an actuator element (41) attached thereto, engages radially inwardly with respect to the actuator main axis (5) into a ring notch (42) formed in the outer circumference of the clamping sleeve (26).

15. Device (24) according to any of claims 11 to 14, **characterized in that** the counter-bearing (36) comprises a lid (37) fixed to the base body (32), preferably a lid mounted on and adhesively bonded to the base body, wherein the lid (37) preferably has a lid opening (43) aligned with the through-openings (19, 21) of the actuator (1) extending along the actuator main axis (5), such that the lid opening (43) allows for a passage of the bolt through the lid (37) into the clamping sleeve (26).

## Revendications

1. Actionneur (1) comprenant
- deux pièces d'extrémité (2, 3) élastiquement soutenues l'une contre l'autre dans la direction d'un axe principal de l'actionneur (5) et
- un fil (11) en alliage à mémoire de forme tendu le long de l'axe principal de l'actionneur (5) entre les pièces d'extrémité (2, 3), qui peut être commandé pour une modification de longueur,
- le fil (11) présentant au moins six sections de longueur (16) continues, qui sont chacune tendues le long de l'axe principal de l'actionneur (5) entre les pièces d'extrémité (2, 3), et
- les sections de longueur (16) tendues entre les pièces d'extrémité (2, 3) s'étendent sous des angles égaux par rapport à une surface de référence, dont l'axe principal de l'actionneur (5) 1s tune normale de surface,
**caractérisé en ce que** les pièces d'extrémité (2, 3) sont élastiquement soutenues l'une contre l'autre par un ressort de compression (4) et **en ce que** les sections de longueur (16) sont tendues entre des points des pièces d'extrémité (2, 3) qui sont chacun disposés le long d'un arc de cercle autour de l'axe principal de l'actionneur (5), les sections de longueur (16) étant disposées à symétrie axiale et/ou de rotation les unes par rapport aux autres par rapport à l'axe principal de l'actionneur (5).

2. Actionneur (1) selon la revendication 1, **caractérisé en ce que** le fil (11) présente au moins 12, de préférence au moins 24 et encore plus préférablement au moins 36 sections de longueur (16) continues, qui sont chacune tendues le long de l'axe principal de l'actionneur (5) entre les pièces d'extrémité (2, 3).

3. Actionneur (1) selon l'une des revendications précédentes, **caractérisé en ce que** les pièces d'extrémité (2, 3) sont soutenues l'une contre l'autre exclusivement par le ressort de compression (4) et le fil (11).

4. Actionneur (1) selon l'une des revendications précédentes, **caractérisé en ce que** les angles égaux par rapport à la surface de référence sont de 80° à 90°, de préférence de 85° à 90° et encore plus préférablement de 90°.

5. Actionneur (1) selon l'une des revendications précédentes, **caractérisé en ce que** les sections de longueur (16) tendues entre les pièces d'extrémité (2, 3) sont disposées à des distances de l'axe principal de l'actionneur (5) qui se situent dans la plage de 0,5 fois ou une fois jusqu'à deux fois ou trois fois une longueur des sections de longueur (16) entre les pièces d'extrémité (2, 3) et/ou **en ce que**, dans le cas d'une symétrie de rotation des sections de longueur (16) par rapport à l'axe principal de l'actionneur (5), la disposition des sections de longueur (16) tendues entre les pièces d'extrémité (2, 3) par rapport à l'axe principal de l'actionneur (5) est à symétrie de rotation moitié multiple et de préférence multiple, comme il y a de sections de longueur (16) tendues entre les pièces d'extrémité (2, 3).

6. Actionneur (1) selon l'une des revendications précédentes, **caractérisé en ce que** le ressort de compression (4) présente au moins une rondelle élastique (6, 7), de préférence deux rondelles élastiques (6, 7) empilées en sens opposé, chaque rondelle élastique (6, 7) étant de préférence soutenue en direction radiale par rapport à l'axe principal de l'actionneur (5) sur au moins une des pièces d'extrémité (2, 3), et **en ce que**, en option, au moins une des pièces d'extrémité (3) présente un profil en chapeau (53), dont le bord (54), sur lequel le fil (11) est tendu, présente dans la direction de l'axe principal de l'actionneur (5) une distance plus grande à l'autre pièce d'extrémité (2) qu'une zone centrale (55), sur laquelle le ressort de compression (4) est soutenu.

7. Actionneur (1) selon l'une des revendications précédentes, **caractérisé**
- **en ce que** le fil (11) est guidé autour de crochets (14, 15) entre ses sections de longueur (16), lesquels sont disposés sur les périphéries (12, 13) des deux pièces d'extrémité (2, 3), ou
- **en ce que** le fil (11) est guidé à travers des trous dans les pièces d'extrémité (2, 3), le fil (11) inversant sa direction entre des trous adjacents dans les pièces d'extrémité (2, 3).

8. Actionneur (1) selon l'une des revendications précédentes, **caractérisé en ce que** le fil (11) peut être commandé pour un raccourcissement thermique par application d'une tension électrique entre ses extrémités (17, 18), le ressort de compression (4) étant en option dimensionné de sorte qu'il rallonge le fil (11) dès que celui-ci refroidit à nouveau en dessous de la température de transition de son alliage à mémoire de forme et/ou **en ce que** l'alliage à mémoire de 2orm eest un alliage à mémoire de forme à double effet.

9. Actionneur (1) selon l'une des revendications précédentes, **caractérisé en ce que** le fil (11) présente plusieurs conducteurs parallèles entre eux et connectés électriquement en parallèle.

10. Actionneur (1) selon l'une des revendications précédentes, **caractérisé en ce que** des ouvertures traversantes (19-22) alignées entre elles s'étendent parallèlement à l'axe principal de l'actionneur (5) à travers les deux pièces d'extrémité, les ouvertures traversantes (19, 21) s'étendant de préférence chacune autour de l'axe principal de l'actionneur (5).

11. Dispositif (24) pour le serrage et la libération d'un boulon avec
- une douille de serrage (26) pour loger une section du boulon,
- un corps de base (32), qui présente un logement (33) avec une section libre décroissante en direction de profondeur pour loger une partie de la douille de serrage (26), et
- un actionneur (1) selon l'une des revendications précédentes,
l'actionneur (1) étant disposé entre la douille de serrage (26) et une butée (36) soutenue sur le corps de base (32) de telle sorte que le ressort de compression (4) applique une force à la douille de serrage (26) dans le logement (33) du corps de base (32).

12. Dispositif (24) selon la revendication 11, **caractérisé en ce que** le logement (33) est limité par une surface intérieure (31) du corps de base (32) en forme de section de manteau conique présentant un premier angle plein et **en ce que** la partie de la douille de serrage (26) logée dans le logement (33) présente une surface extérieure (30) en forme de section de manteau conique présentant un deuxième angle plein, le premier angle plein et le deuxième angle plein étant égaux, le premier angle plein et le deuxième angle plein étant de préférence dans une plage de 10° à 20°.

13. Dispositif (24) selon la revendication 11 ou 12, **caractérisé en ce que** l'une des pièces d'extrémité (2) de l'actionneur (1) est fixée en direction de l'axe principal de l'actionneur (5) sur la butée (36) et l'autre des pièces d'extrémité (3) de l'actionneur (1) est fixée en direction de l'axe principal de l'actionneur (5) sur la douille de serrage (26), de sorte que la douille de serrage (26) est tirée hors du logement (33) dans le corps de base (32) lors de la commande du fil (11) pour un raccourcissement.

14. Dispositif (24) selon la revendication 13, **caractérisé en ce que** l'autre des pièces d'extrémité (3) de l'actionneur (1) ou un élément d'actionneur (41) fixé à celle-ci s'engage radialement vers l'intérieur par rapport à l'axe principal de l'actionneur (5) dans une gorge annulaire (42) formée sur la périphérie extérieure de la douille de serrage (26).

15. Dispositif (24) selon l'une des revendications 11 à 14, **caractérisé en ce que** la butée (36) présente un couvercle (37) fixé sur le corps de base (32), de préférence un couvercle (37) posé sur le corps de base (32) et collé à celui-ci, le couvercle (37) présentant de préférence une ouverture du couvercle (43) qui est alignée avec les ouvertures traversantes (19, 21) de l'actionneur (1) s'étendant sur l'axe principal de l'actionneur (5), de sorte qu'elle permet le passage du boulon à travers le couvercle (37) jusqu'à la douille de serrage (26).
